# EUROPEAN PATENT SPECIFICATION

(11) **EP 2 088 134 B1**
(45) Date of publication and mention of the grant of the patent: **07.09.2016**
(21) Application number: 07123733.3
(22) Date of filing: 19.12.2007
(51) Int. Cl.: C04B 35/185, C04B 38/00, C04B 35/195

(54) **LIGHTWEIGHT CERAMIC MATERIAL**
LEICHTES KERAMISCHES MATERIAL
MATÉRIEL CÉRAMIQUE ULTRALÉGER

(43) Date of publication of application: 12.08.2009
(73) Proprietor: Imerys Kiln Furniture Hungary Ltd., 6800 Hódmezövásárhely (HU)
(72) Inventor: Weber, Monika Josefa, 37671, Höxter (DE); Bonomi, Zoltan Geza, 6800, Hodmezövasarhely (HU); Dr. Sonntag, Andreas, 83512, Wasserburg (DE)
(74) Representative: Nash, David Allan

(56) References cited:
- EP-A- 0 450 773
- EP-A- 0 543 581
- GB-A- 2 260 541
- US-A- 5 753 573
- US-A- 5 849 650
- US-A1- 2004 157 724

## Description

The invention relates to a lightweight ceramic material, and methods of the manufacture thereof.

### Background of the Invention

Ceramic materials are used for a wide field of practical applications. For example, in the field of kiln furniture materials, refractory ceramic materials are used as carrier materials for green ceramic products subjected to firing. The refractory carriers are given a three-dimensional shape corresponding to the green ceramic products to avoid or reduce deformations during the sintering process of the green body.

Several ceramic materials have been described for the manufacture of refractory ceramic carriers suitable for that specific application. The ceramic material has to fulfill several requirements: First, the material must show sufficient refractory properties, i.e., the ceramic material should not reach its melting or sintering point at the temperatures of use (corresponding to the sintering temperatures of the green ceramic product located at the refractory carrier). Additionally, the refractory ceramic carrier should have no or only minor contact reactions with the green ceramic product that may result in a change of the properties of the green ceramic product.

Furthermore, the refractory carrier must show sufficient thermal shock resistance to avoid cracking, and sufficient thermal conductivity to avoid irregular heat distribution in the green ceramic product during the sintering process. Additionally, the material should have a low thermal expansion coefficient to avoid thermo-mechanical stress that may result in deformations or cracking of the green ceramic product during the heating and cooling periods of the sintering process.

If the above requirements are not fulfilled, mechanical and/or thermal stress may cause deformation or cracks in the both the green ceramic product and/or its refractory carrier, resulting in an increased amount of reject production.

In addition, it is desired that the refractory carrier has a low heat capacity. During the sintering process, the whole content of a kiln, i.e., green ceramic products as well as the refractory carriers, must be heated up to the desired sintering temperature of the green ceramic material. Thus, the amount of energy required for reaching the final sintering temperature depends on the heat capacity of the whole content of the kiln, i.e., green ceramic products as well as the carriers. However, while the amount of energy which is required for the sintering process of the green ceramic product is constant, the amount of energy for heating the carrier to sintering temperatures can be decreased by decreasing the heat capacity of the carrier material. Since the heat capacity increases with the mass of the carrier material heated in the kiln, it is desired to reduce the mass of the carriers. This goal can be reached by reducing the density of the refractory carrier material.

Moreover, the refractory carrier material should have a mechanical stability which allows a reasonable mechanical load on the refractory ceramic carriers. The mechanical stability can be expressed by the modulus of rupture.

Since the refractory carriers are produced in high numbers, the refractory ceramic material should be inexpensive, and the process for its preparation should be cost-effective.

Aside from the above referenced use, a refractory ceramic material having the above properties may be used for several refractory applications.

Several attempts have been made to improve the properties of refractory ceramic materials for the above purposes; however, a refractory ceramic material meeting all of the above criteria in an ideal manner has not yet been found. Thus, there is a need in the art for new refractory ceramic materials showing improved properties over those of the prior art.

A conventional refractory material known in the art is cordierite. However, this material is expensive and has a heat capacity that is undesirably high.

It is known in the state of art that the density of ceramic material can be decreased by increasing the pore volume. For example, the raw material compositions for preparing a refractory material may contain pore forming agents, i.e., materials such as graphite, plastic grains or saw dust from wood processing, which materials decompose during the sintering process, resulting in the generation of a pore at their original position. Alternatively, it is known to use hollow spheres of ceramic or glassy material, which may be included into the raw material compositions for refractory materials. These materials allow the formation of pores having a more precisely defined shape and size distribution, since the hollow space included into the original sphere remains substantially unchanged during the firing process. Such sphere particles may be derived, e.g., from fly ash. The properties and use of such particles is described in Energeia 1996, 7(4), 1-6.

However, compositions comprising such hollow spheres in the raw material may be difficult to handle in the manufacturing process. In particular, due to the high difference in density between the spheres and the further solid phases present in the raw material composition, the mixture is sensitive to separation processes, in particular in the presence of liquids and when subjected to mechanical excitation. Thus, the application of casting and moulding methods for manufacture of green ceramic bodies from raw materials comprising such hollow spheres is rather limited. In particular, vibration casting and slip casting methods have not previously been considered suitable due to the large mechanical excitation.

EP 0 543 581 A discloses two types of compositions suitable for end use as a kiln furniture element at temperatures over 1600°C and up to 1350°C, respectively, the compositions comprising silica sol, alumina, alumina microspheres and organic suspending agents. The disclosed compositions would not be considered suitable for exposure to a large mechanical excitation.

EP 0 450 773 A discloses slip formulations wherein ceramic bubbles are present in amounts of 3.5 wt%, 4.9 wt%, 13.7 wt%, 4.95 wt%, 6.91 wt%, 9.69 wt% and 12.97 wt%, respectively. The formulations contain only one other solid component, which is a mullite precursor consisting of alumina and silica, mixed with a dispersant and a plasticizer. In these examples, 1-millimeter thick films are being manufactured by tape casting.

Moreover, the use of hollow spheres in ceramic materials results in a decrease of thermal conductivity of the obtained ceramic materials. In other words, such ceramic materials are good thermal insulators. However, for the use as carriers of green ceramic products, it is desired that the carrier material has a good thermal conductivity, resulting in an uniform distribution of heat in the green ceramic product.

It has now been found that such particles may be used for the manufacture of refractory ceramic materials having the thermal properties (high thermal conductivity, low heat capacity) desired for the use in the field of kiln furniture and carriers for green ceramic products, and in addition, having a low density. Moreover, it was surprisingly found that the raw materials for the preparation of these refractory ceramic materials can be subjected to substantially all known moulding or casting methods including vibration casting and slip casting without substantial separation of the hollow particles from the dense phases.

### Summary of the Invention

The present invention is directed to a lightweight ceramic material comprising a ceramic matrix and ceramic microspheres, wherein said ceramic material has a density of not more than 1.80 g/cm³ and a modulus of rupture of at least 15.0 MPa. The ceramic matrix comprises a material selected from the group consisting of cordierite, alumina, zirconia, zirconia silicates, mullite and mixtures thereof. The ceramic matrix comprises at least 75%, or at least 60%, or at least 40% of cordierite, and comprises also of at least 50% or at least 25% or at least 10% mullite.

In a further embodiment, the density is below 1.70 g/cm³, or below 1.65 g/cm³, or below 1.60 g/cm³. In a further embodiment, the modulus of rupture is at least 18 MPa, or at least 20 MPa, or at least 22 MPa, or at least 24 MPa. In yet a further embodiment, the ceramic material has a density of below 1.60 g/cm³, while the modulus of rupture is greater than 20 MPa.

In one embodiment, the ceramic microspheres of the lightweight ceramic material comprise a material selected from the group consisting of crystalline and/or amorphous alumina, silica, aluminosilicate, residual glass phase and mixtures thereof. In a further embodiment, the microspheres comprise of mullite. The microspheres may be in the size range a particle size ranging from 1 micron to 500 microns, or from 1 micron to 300 microns, or from 1 micron to 200 microns. The ceramic microspheres can also show a bimodal particle size distribution.

In another embodiment, the ceramic material of the present invention has a thermal shock resistance of at least 120 seconds, or at least 140 seconds, or at least 200 seconds, determined by the flame contact test described in the section "Definitions and Methods".

In another embodiment, the ceramic material of the present invention shows a maximal high temperature creep at 1200 °C of 6 mm, or 4 mm, or 3 mm, or 2 mm, determined by the test described in the section "Definitions and Methods".

In another embodiment, the open porosity of the ceramic material of the present invention is in the range of 30% to 60%, or in the range of 30% to 50%, or in the range of 30% to 45%.

The present invention is also directed to kiln furniture pieces comprising the ceramic materials of the invention. In a further embodiment, the kiln furniture pieces are for the heat treatment of roof tiles. In yet a further embodiment, the kiln furniture pieces are H-cassettes or U-cassettes.

The present invention is also directed to a slip formulation for the manufacture of green ceramic bodies, the formulation comprising:
- 30 to 50 % (based on the dry weight of the composition) of one or more refractory phases;
- 45 to 65 % (based on the dry weight of the composition) of one or more ceramic bonding phases;
- 3 to 15 %, or 3 to 12 %, or 3 to 10 % (based on the dry weight of the composition) of ceramic microspheres;
   wherein the total of the above compounds does not exceed 100 %; and
- 15 to 30 % (based on the dry weight of the composition) of a fluid phase.

In a further embodiment, the refractory phases of the slip formulation of the invention are selected from the group consisting of calcined clay, chamotte, fused alumina, tabular alumina, magnesia-alumina spinell, cordierite kyanite, andalusite, kaoline, and fused mullite. In yet a further embodiment, the refractory phases are selected from the group of chamotte phases, in particular, mullite chamotte.

In a further embodiment, the ceramic bonding phases of the slip formulation of the present invention are selected from the group consisting of natural alumina silicates, clay, reactive alumina, magnesia-alumina spinell, aluminium salts, aluminium hydroxide, aluminiumoxyhydroxide, magnesia silicates, magnesium carbonates, magnesium hydroxide, magnesium salts, talcum, silica, zirconia, zirconia silicates, or mixtures thereof. In a further embodiment, one or more of the ceramic bonding phases are present in the form of colloids.

In a further embodiment, the fluid phase of the slip formulation of the invention consists of water and one or more deflocculating agents. In a further embodiment, the deflocculating agents may be selected from the group consisting of sodium silicate, sodium polyacrylates and anionic or ionic tensides. In a further embodiment, the deflocculating agents may be present in an amount of 0,001% - 0,1%, based on the total dry weight of the formulation. In a further embodiment, the viscosity of the slip formulation of the invention is within a range from 1500 to 6000 centipoise. In another embodiment, the slip formulation has a liter weight from 1650 to 3000g.

The present invention is further directed to the use of a slip formulation as defined above for the manufacture of a green ceramic body by a process selected from the group consisting of a slip casting process, a low pressure casting process, a high pressure casting process, or a vibration casting process.

The present invention is further directed to a process for the manufacture of a ceramic material as described above, characterized in that a slip formulation as described above is subjected to a slip cast process to generate a green ceramic body, and subjecting the green ceramic body to a sintering process.

### Brief Description of the Figures

Figure 1 shows a SEM picture of a section through a refractory ceramic material of Example 1 at a magnification of 100x.
Figure 2 shows a SEM picture of a section through a refractory ceramic material of Example 1 at a magnification of 300x.
Figure 3 shows a SEM picture of a section through a refractory ceramic material of Example 1 at a magnification of 500x.
Figure 4 shows the measurement equipment for the determination of the sagging parameter used in the description of the present invention.

### Detailed Description of the Invention

### Definitions and Methods:

The "dry weight" of the formulation for slip casting refers to the total weight of any compounds discussed herein to be suitable to be used in the formulation, i.e., the total weight of the refractory phases, ceramic bonding phases, and microspheres.

The term "refractory phase" is used herein for the description of such raw material phases which do not undergo chemical reactions during the sintering process, aside from the formation of sintered bridges on the surface thereof. Thus, the mineral composition of those refractory phases is essentially the same before and after the sintering process.

The term "ceramic bonding phase" is used herein for the description of such raw material phase which undergo chemical reactions resulting in the formation of new mineral phases (i.e., phases which may not be present in the green ceramic body formed from those raw materials) during the sintering process.

The term "chamotte" is used herein for the description of a product prepared by pre-firing of a natural mineral composition such as, e.g., clay, and subsequent work-up of the obtained product by milling. It is understood by the skilled person that "chamotte" is a generic term encompassing products of variable composition. These products are further specified by addition of the name of the main mineral phase present therein. For example, the term "mullite chamotte" refers to a product comprising mullite as the main compound.

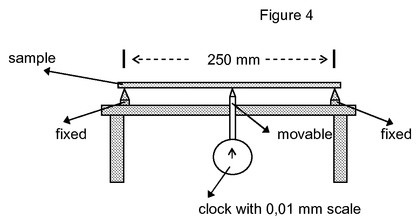

The ceramic materials of the present invention are characterized herein by the provision of data regarding the high temperature creep behavior of the material at 1200 °C. These values are determined as follows: Samples having a length of 290mm, a width of 25 mm, and a height of 10 mm are prepared. The samples are placed with each end on a support, the supports being 250 mm apart (span 250 mm). On top of the sample a load of 0.5 MPa is placed, located in the center of the two downer supports. The actual load in grams is calculated for each piece on base of actual sizes of the sample bar. The samples supported over a span of 250 mm and loaded with 0.5 MPa are fired with a firing cycle characterized by a heating rate of 2 °C/min, an end temperature of 1200 °C, and a soaking time of 10 hours. The registered value is the difference in flatness of the sample before and after firing as "high temperature creep in mm". The equipment for determining the flatness is depicted in Figure 4.

The thermal shock resistance of the ceramic materials of the present invention is determined as follows: Samples having a length of 290mm, a width of 130 mm, and a height of 10 mm are prepared. Testing equipment is a common pilot burner, operated with a fixed gas-air ratio of 1 : 11 m³ₙ /h. The burner is started and run in on a flame temperature of 940 °C. The flame temperature is checked with a Ni/Cr - Ni thermocouple. After reaching the required test temperature, the burner is run for 5 minutes under the same conditions. The flame temperature is checked again, and if stable, the test is started. The Sample is placed in a metal frame in horizontal position. Sample and frame are pivoted in horizontal position over the open flame. Final position of frame and sample assures the open flame to touch the sample in the center. The distance between sample surface and upper rim of the burner tube is 95 mm. Measuring time starts with reaching the final position frame and sample over the open flame. Measuring time ends with the appearance of first visible cracks or breakage of the sample. Registration value is the time in seconds until visible cracks appear or breakage of the sample as "thermal shock resistance in seconds".

Phase analysis was executed with JEOL x-ray diffraction equipment, type JDX-8S, phases were analyzed by using software XDB (powder diffraction phase analytical system).

Density and porosity and water absorption were determined according to MSZ EN 993-1.

Modulus of rupture (MOR) was measured on samples 290 x 20 x 10 mm with as fired surface as 3-points bending test with a span of 120 mm and an load rate of 0,15 MPa/sec. Applied equipment was a METEFEM Bending Tester XP-01; type MH-1 / AS 102. The measurements were performed at a temperature of 20 °C.

Viscosity was measured with GALLENKAMP torsion viscometer VHA-200-M, using a torsion wire 30 SWG and a cylinder ¼ ".

Sieving of coarse raw materials was carried out with standardized sieves, type RETSCH of mesh sizes according to the raw material, using SASKIA vibration sieving equipment, type THYR.

Analysis of grain size distribution of fine raw materials was done by CILAS type 715.

### Preparation of Compositions for Casting/Moulding

The solid raw materials suitable for the preparation of the ceramic material of the present invention (refractory phases of variable composition, ceramic bonding phases, ceramic microspheres, etc.) can be used in the form of powders, suspensions, dispersions, and the like, for the use according to the present invention. Corresponding formulations are commercially available and known to the person skilled in the art.

Mineral phases suitable for the use as refractory phases are selected from the group of calcined clay, chamotte, fused alumina, tabular alumina, magnesia-alumina spinell, cordierite, kyanite, andalusite, kaoline, fused cordierite, and fused mullite, and mixtures thereof. Mineral phases suitable for the use as ceramic bonding phases are selected from the group consisting of natural alumina silicates, clay, reactive alumina, aluminium salts, aluminium hydroxide, aluminiumoxyhydroxide, magnesia silicates, magnesium carbonates, magnesium hydroxide, magnesium salts, magnesia-alumina spinell, talcum, silica, zirconia, zirconia silicates and mixtures thereof. The exact composition of the raw material mixture depends on the desired composition of the final ceramic product.

The deflocculating agents used for the present invention are also all commercially available from various sources known to the person skilled in the art. Examples for deflocculating agents suitable for the purposes of the present invention include, but are not limited to sodium silicate, sodium polyacrylates, non-ionic or ionic tensides., which are typically used in the range of 0,001% - 0,1%, whereas 100% refers to the total dry weight of the raw material. The amount of addition of the deflocculating agents depends type of selected deflocculant and the specific surface characteristics of the fine ingredients of the formulations, i.e. ball clay, talcum, reactive alumina and other optional components.

The preparation of a formulation suitable for slip casting from the raw materials is performed according to methods and techniques known in the art. For example, the raw materials can be mixed in a conventional mixing machine under addition of a sufficient amount of a suitable liquid phase (normally water) to obtain a suspension suitable for slip casting. Alternatively, it is possible to use the methods of high pressure casting, low pressure casting, or vibration casting to obtain green ceramic bodies for the manufacture of ceramic materials of the present invention. Additionally, all conventional casting or moulding equipment known in the art can be used. A summary on the technology is given in the textbook of W. Kollenberg (ed.), Technische Keramik, Vulkan-Verlag, Essen, Germany, 2004, which is incorporated herein by reference.

### Composition of the Final Lightweight Ceramic Material

The matrix comprises a cordierite mineral phase. The cordierite may be brought into the final product in the form of a refractory phase, i.e., as a preformed cordierite phase in the raw material. Alternatively or additionally, the raw materials may comprise and ceramic bonding phases which react under sintering conditions to form cordierite. Suitable raw materials for the *in situ* formation of cordierite comprise, but are not limited to, talc, mullite, and clay minerals, in a calculated amount. The chemical reactions resulting in the formation of cordierite, as well as the corresponding reaction conditions, are known to the person skilled in the art. A summary is given in the textbook of W. Kollenberg (ed.), Technische Keramik, Vulkan-Verlag, Essen, Germany, 2004.

The ceramic microspheres suitable for the purpose of the present invention can vary in size and chemical composition. A suitable product for the use of the present invention is ceramic microspheres of mullite and/or alumina silicate that might contain some residual glass phase(s) or of similar chemical composition that are recovered from fly ash. However, further ceramic hollow spheres of defined size and chemistry are commercially available, which are suitable for the use in the ceramic materials of the present invention.

The ceramic matrix comprises cordierite and mullite. In a further embodiment, the mullite is introduced into the ceramic material by including mullite chamotte as a refractory phase in the mixture of raw materials, while cordierite is formed during the sintering process from suitable ceramic bonding phases included into the mixture of raw materials.

During the sintering process, the ceramic microspheres included into the mixture of raw materials maintain their size and shape, but are firmly included into the final ceramic structure. Thus, the ceramic microspheres provide a well-defined pore volume formed by the inner hollow space included by the microspheres. This leads to a controlled increase of the pore volume, resulting in a reduced density and heat capacity, while the thermal and mechanical properties of the ceramic material are mainly determined by the nature of the ceramic matrix. Consequently, the advantageous properties of cordierite (or other refractory) ceramics can be combined with a reduced heat capacity of a porous product containing ceramic microspheres in a previously unknown range.

The described ceramic material and its shaping and firing methods describes the basic process to produce ceramic kiln furniture used for the heat treatment of various product at elevated temperature. These products can typically be ceramic parts in the field of heavy clay products such as roof tile, bricks, tableware, sanitary ware or other technical ceramics. The products to be heat treated at elevated temperatures can be inorganic powders which need undergo certain thermally activated reaction. The product can furthermore be metal- or glass components, which need to be heat treated for annealing- or hardening purposes.

The typical shapes of the kiln furniture products used can be H-cassettes and U-cassettes, box saggars, plate saggars, batts, plates, cranks, posts, connecting kiln furniture elements and others to be suitable for the specific heat treatment processes.

For H-cassettes, a total weight reduction of 20% can be achieved with moderate effects of the physical key properties by the use of the ceramic materials of the invention.

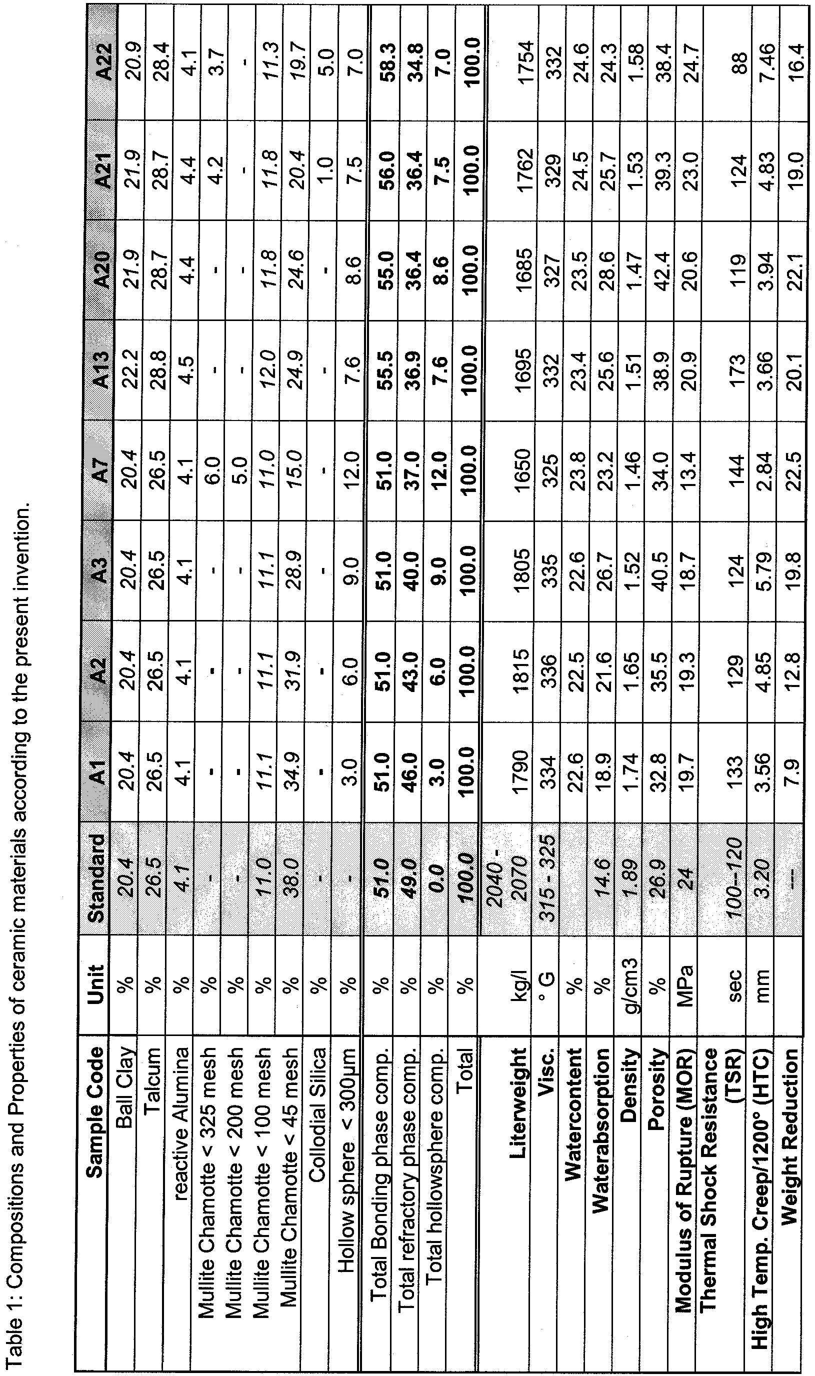

### Examples

### Example 1: Preparation of formulations for slip casting and ceramic materials of the invention

The raw materials listed in Table 1 were mixed in a conventional mixer (IKA, type Turbotron) to obtain a suspension that is used for conventional casting in plaster moulds to obtain green ceramic bodies with the specimen dimension of 290 x 130 x 10 mm.

The composition of the mineral phases of the suspensions used in this example, as well as the water content and the liter weight thereof, are given in Table 1. The slip viscosities are adjusted according to the best practice for an industrial production. The deflocculants used are based on sodium silicates in the range of 0,005% - 0,1% in weight, where 100% is the total amount of the dry raw materials.

After drying, the green ceramic bodies are subjected to a sintering process. Basically, any kiln or oven suitable for sintering of ceramic materials known in the art may be used. The temperature program for the sintering process depends on the chemical composition of the raw materials used and the chemical reactions intended to be run during the sintering process. For compositions containing cordierite as a refractory phase or cordierite-forming ceramic bonding phases as described above, it is preferred that the sintering process is performed in a temperature interval from 1300 °C to 1400 °C

The mechanical and thermal properties (density, porosity, thermal shock resistance, modulus of rupture, sagging, weight reduction) of the ceramic bodies obtained are also reproduced in Table 1.

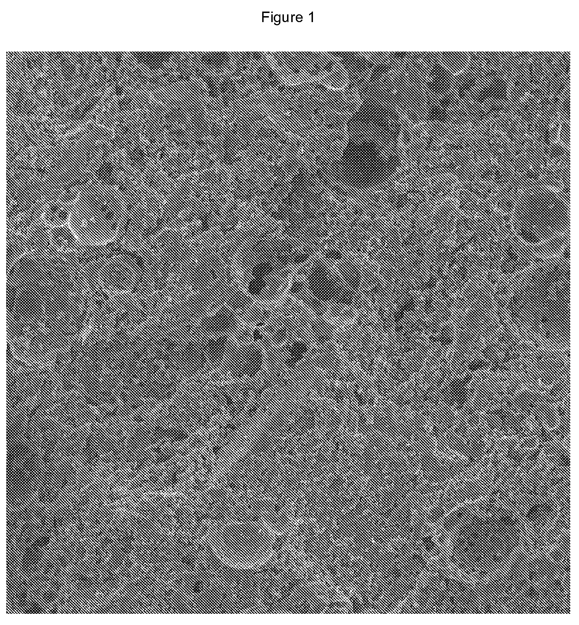

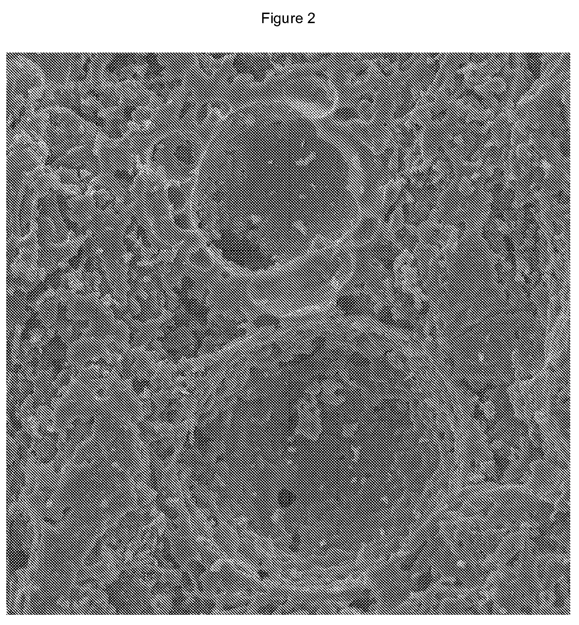

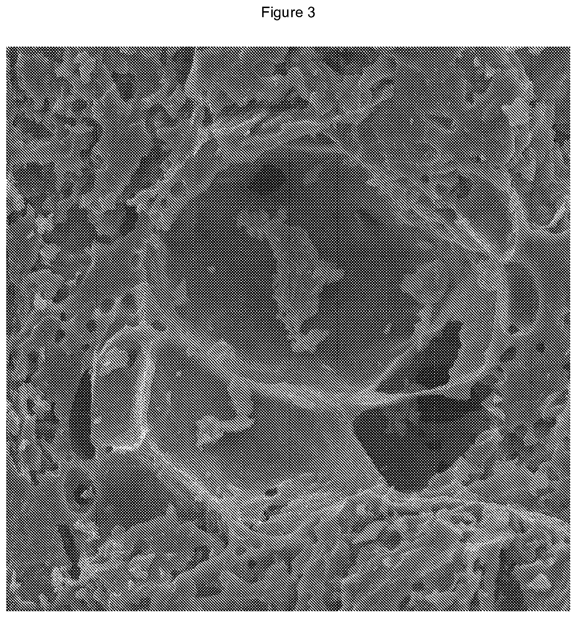

Figures 1-3 show SEM pictures of a section from a ceramic body according to Example 1 (A20) at different magnifications. It can be seen that the original microspheres maintain their size and shape during the sintering process, resulting in the formation of major pores of well-defined size and shape. The walls of the spheres show minor pores communicating with the pore room of the ceramic matrix, while the wall is firmly embedded into the ceramic matrix.

### Example 2: H-cassettes Consisting of the Ceramic Material of the Invention

A set of approx.1000 H-cassettes in the composition of the invention has been produced and implemented in 4 different roof tile production sites. The firing condition vary from Tₘₐₓ of 1080-1200°C, roof tile raw material compositions as well a the automated loading and unloading system vary accordingly. All cassettes are used together with standard cassettes, i.e. identical application conditions.

The cassettes' performance are here directly compared with standard cassettes and all decisive criteria such as chipping, geometric stability, corrosion and mechanical strength are monitored.

After the first 6 months the cassettes have basically a compatible performance as standard Cordierite cassettes. The product qualities of the roof tiles are unaffected.

## Claims

1. A lightweight ceramic material comprising:
• a ceramic matrix; and
• ceramic microspheres;
wherein said ceramic material has a density of not more than 1.80 g/cm³ and a modulus of rupture of at least 15.0 MPa,
wherein said ceramic matrix comprises a material selected from the group consisting of cordierite, alumina, aluminasilicates, zirconia, zirconia silicates, mullite and mixtures thereof,
and **characterised in that**
the ceramic matrix comprises at least 40 - 75% of cordierite and at least 10 - 50% mullite.

2. The ceramic material of claim 1, wherein the density is below 1.70 g/cm³.

3. The ceramic material of claim 1 or 2, wherein the modulus of rupture is at least 18.0 MPa.

4. The ceramic material according to any one of the preceding claims, wherein the modulus of rupture is at least 20.0 MPa.

5. The ceramic material according to any one of the preceding claims, where said ceramic microspheres comprise a material selected from the group consisting of crystalline and/or amorphous phases of alumina, silica, aluminasilicate, mullite, residual glass phase(s) and mixtures thereof.

6. The ceramic material of claim 5, wherein said microspheres have particle sizes ranging from 1 micron to 500 microns.

7. The ceramic material of claim 6, wherein the microspheres have particle sizes ranging from 1 micron to 200 microns.

8. The ceramic material according to any one of the preceding claims, **characterized in that** the porosity is in the range of 30% to 60%.

9. A slip formulation for the manufacture of green ceramic bodies, for the manufacture of a lightweight ceramic material of any one of claims 1 to 8, the formulation comprising:
• 30 to 50 % (based on the dry weight of the composition) of one or more refractory phases;
• 45 to 65 % (based on the dry weight of the composition) of one or more ceramic bonding phases;
• 3 to 15 % (based on the dry weight of the composition) of microspheres;
wherein the total of the above compounds does not exceed 100 %; and
• 15 to 30 % (based on the dry weight of the composition) of a fluid phase.

10. The slip formulation according to claim 9, **characterized in that** the refractory phases are selected from the group consisting of calcined clay, chamotte, fused alumina, tabular alumina, magnesia-alumina spinell, cordierite, kyanite, andalusite, kaoline, and fused mullite.

11. The slip formulation according to claim 9 or 10, **characterized in that** the ceramic bonding phases are selected from the group consisting of natural alumina silicates, clay, reactive alumina, aluminium salts, aluminium hydroxide, aluminiumoxyhydroxide, magnesia silicates, magnesium carbonates, magnesium hydroxide, magnesium salts-alumina spinell, cordierite, talcum, silica, zirconia, zirconia silicates, or mixtures thereof.

12. The slip formulation according to claim 11, wherein one or more of the ceramic bonding phases are present in the form of colloids.

13. The slip formulation according to any one of claims 9 to 12, **characterized in that** the fluid phase consists of water and one or more deflocculating agents.

14. The slip formulation according to any one of claims 9 to 13, **characterized in that** it has a liter weight from 1650 to 3000 g/L.

15. The use of a slip formulation according to any one of the preceding claims 9 to 14 for the manufacture of a green ceramic body by a process selected from the group consisting of a slip casting process, a low pressure casting process, a high pressure casting process, or a vibration casting process.

16. A process for the manufacture of a ceramic material according to claim 1, **characterized in that** a slip formulation according to claim 9 is subjected to a slip cast process to generate a green ceramic body, and subjecting the green ceramic body to a drying and a sintering process.

17. A kiln furniture piece comprising the ceramic material according to any one of the preceding claims 1 to 8.

18. The kiln furniture piece of claim 17, wherein the kiln furniture piece is for the heat treatment of ceramic roof tiles.

19. The kiln furniture piece of claim 18, wherein the kiln furniture piece is a H-cassette or U-cassette.

20. A kiln furniture piece comprising the ceramic material produced according to the process of claim 16.

## Patentansprüche

1. Leichter keramischer Werkstoff, umfassend
• eine keramische Matrix; und
• keramische Mikrokugeln;
wobei der keramische Werkstoff eine Dichte nicht größer als 1,80 g/cm³ hat und eine Biegefestigkeit von mindestens 15,0 MPa,
wobei die keramische Matrix einen Werkstoff umfasst, ausgewählt aus der Gruppe Cordierit, Aluminiumoxyd, Aluminasilicate, Zirkonoxyd, ZirkonoxydSilicate, Mullit und deren Gemische,
und **dadurch gekennzeichnet, dass**
die keramische Matrix mindestens 40 bis 75% Cordierit und mindestens 10 bis 50% Mullit umfasst.

2. Keramischer Werkstoff gemäß Anspruch 1, wobei die Dichte unter 1,70 g/cm³ ist.

3. Keramischer Werkstoff gemäß Anspruch 1 oder 2, wobei die Biegefestigkeit mindestens 18,0 MPa ist.

4. Keramischer Werkstoff gemäß irgendeinem der vorhergehenden Ansprüche, wobei die Biegefestigkeit mindestens 20,0 MPa ist.

5. Keramischer Werkstoff gemäß irgendeinem der vorhergehenden Ansprüche, wobei die keramischen Mikrokugeln einen Werkstoff umfassen, ausgewählt aus der Gruppe kristalline und/oder amorphe Phasen von Aluminiumoxyd, Siliciumdioxyd, Aluminasilicat, Mullit, residuelle Glasphase(n) und deren Gemische.

6. Keramischer Werkstoff gemäß Anspruch 5, wobei die Mikrokugeln Korngrößen im Bereich von 1 Mikrometer bis 500 Mikrometer haben.

7. Keramischer Werkstoff gemäß Anspruch 6, wobei die Mikrokugeln Korngrößen im Bereich von 1 Mikrometer bis 200 Mikrometer haben.

8. Keramischer Werkstoff gemäß irgendeinem der vorhergehenden Ansprüche, **dadurch gekennzeichnet, dass** die Porosität im Bereich von 30% bis 60% ist.

9. Gießschlickerformulierung für die Herstellung von keramischen Grünkörpern, für die Herstellung eines leichten keramischen Werkstoffs aus irgendeinem der Ansprüche 1 bis 8, die Formulierung umfassend
• 30 bis 50% (auf der Basis des Trockengewichts der Zusammensetzung) einer oder mehrerer Feuerfestphasen;
• 45 bis 65% (auf der Basis des Trockengewichts der Zusammensetzung) einer oder mehrerer keramischer Bindungsphasen;
• 3 bis 15% (auf der Basis des Trockengewichts der Zusammensetzung) Mikrokugeln; wobei die Summe der oben genannten Verbindungen 100% nicht überschreitet; und
• 15 bis 30% (auf der Basis des Trockengewichts der Zusammensetzung) einer fluiden Phase.

10. Gießschlickerformulierung gemäß Anspruch 9, **dadurch gekennzeichnet, dass** die Feuerfestphasen ausgewählt sind aus der Gruppe calcinierter Ton, Chamotte, Schmelzkorund, tafeliges Aluminiumoxyd, Magnesiumoxyd-Aluminiumoxyd-Spinell, Cordierit, Kyanit, Andalusit, Kaolin und Schmelzmullit.

11. Gießschlickerformulierung gemäß Anspruch 9 oder 10, **dadurch gekennzeichnet, dass** die keramischen Bindungsphasen ausgewählt sind aus der Gruppe natürliche Aluminasilicate, Ton, reaktives Aluminiumoxyd, Aluminiumsalze, Aluminiumhydroxyd, Aluminiumoxyhydroxyd, Magnesiumoxyd-Silicate, Magnesiumcarbonate, Magnesiumhydroxyd, Magnesiumsalz-Aluminiumoxyd-Spinell, Cordierit, Talkum, Siliciumdioxyd, Zirkonoxyd, Zirkonoxyd-Silicate und deren Gemische.

12. Gießschlickerformulierung gemäß Anspruch 11, wobei ein oder mehrere der keramischen Bindungsphasen in der Form von Kolloiden vorliegen.

13. Gießschlickerformulierung gemäß irgendeinem der Ansprüche 9 bis 12, **dadurch gekennzeichnet, dass** die fluide Phase aus Wasser und einem oder mehreren Entflockungsmitteln besteht.

14. Gießschlickerformulierung gemäß irgendeinem der Ansprüche 9 bis 13, **dadurch gekennzeichnet, dass** sie ein Litergewicht von 1850 bis 3000 g/L hat.

15. Verwendung einer Gießschlickerformulierung aus irgendeinem der Ansprüche 9 bis 14 für die Herstellung eines keramischen Grünkörpers durch ein Verfahren, ausgewählt aus der Gruppe Schlickergussverfahren, Niedrigdruckgussverfahren, Hochdruckgussverfahren oder Vibrationsgussverfahren.

16. Herstellungsverfahren für einen keramischen Werkstoff aus Anspruch 1, **dadurch gekennzeichnet, dass** eine Gießschlickerformulierung aus Anspruch 9 einem Schlickergussverfahren unterzogen wird zum Herstellen eines keramischen Grünkörpers, und Unterziehen des keramischen Grünkörpers einem Trocknungs- und Sinterverfahren.

17. Ofenausstattungsstück, umfassend den keramischen Werkstoff aus irgendeinem der vorhergehenden Ansprüche 1 bis 8.

18. Ofenausstattungsstück gemäß Anspruch 17, wobei das Ofenausstattungsstück für die Hitzebehandlung von keramischen Dachziegeln ist.

19. Ofenausstattungsstück gemäß Anspruch 18, wobei das Ofenausstattungsstück eine H-Kassette oder eine U-Kassette ist.

20. Ofenausstattungsstück, umfassend den keramischen Werkstoff, hergestellt nach dem Verfahren aus Anspruch 16.

## Revendications

1. Un matériau céramique léger comprenant :
• une matrice céramique; et
• des microsphères céramiques ;
où ledit matériau céramique dispose d'une densité qui n'est pas supérieure à 1,80 g/cm³ et un module de rupture d'au moins 15,0 MPa,
où ladite matrice céramique comprend un matériau sélectionné à partir d'un groupe constitué en cordiérite, alumine, silicates d'alumine, zircone, silicates de zircone, mullite et leurs mélanges,
et **caractérisé en ce que**
la matrice céramique comprend au moins 40 - 75 % de cordiérite et au moins 10 - 50 % de mullite.

2. Le matériau céramique selon la revendication 1 où la densité est inférieure à 1,70 g/cm³.

3. Le matériau céramique selon la revendication 1 ou 2 où le module de rupture est d'au moins 18,0 MPa.

4. Le matériau céramique selon l'une quelconque des revendications précédentes où le module de rupture est d'au moins 20,0 MPa.

5. Le matériau céramique selon l'une quelconque des revendications précédentes
où lesdites microsphères céramiques comprennent un matériau sélectionné à partir du groupe constitué en phases amorphes et/ou cristallines d'alumine, en silice, en silicate d'alumine, en mullite, en phase(s) résiduelle(s) de verre et en leurs mélanges.

6. Le matériau céramique selon la revendication 5 où lesdites microsphères disposent de particules dont les tailles varient de 1 micron à 500 microns.

7. Le matériau céramique selon la revendication 6 où lesdites microsphères disposent de particules dont les tailles varient de 1 micron à 200 microns.

8. Le matériau céramique selon l'une quelconque des revendications précédentes **caractérisé en ce que** la porosité se situe dans un intervalle compris entre 30 % et 60 %.

9. Une formulation de barbotine pour la réalisation de corps verts en céramique pour la fabrication du matériau céramique léger de l'une des revendications de 1 à 8, la formulation comprenant :
• de 30 à 50 % (sur la base du poids à sec de la composition) de l'une ou de plusieurs phases réfractaires ;
• de 45 à 65 % (sur la base du poids à sec de la composition) de l'une ou de plusieurs phases de liaison céramique ;
• de 3 à 15 % (sur la base du poids à sec de la composition) des microsphères où le total des composants ci-dessus n'excède pas les 100 % ; et
• de 15 à 30 % (sur la base du poids à sec de la composition) d'une phase fluide.

10. La formulation de barbotine selon la revendication 9 **caractérisée en ce que** les phases réfractaires sont sélectionnées à partir du groupe constitué en argile calcinée, chamotte, alumine fondue, alumine tabulaire, spinelle magnésitealumine, cordiérite, disthène, andalousite, kaolin et mullite fondue.

11. La formulation de barbotine selon la revendication 9 ou 10 **caractérisée en ce que** les phases de liaison céramique sont sélectionnées à partir d'un groupe constitué en silicates d'alumine naturels, argile, alumine réactive, sels d'aluminium, hydroxyde d'aluminium, oxyhydroxyde d'aluminium, silicates de magnésie, carbonates de magnésium, hydroxyde de magnésium, spinelle de sels de magnésium-alumine, cordiérite, talc, silice, zircone, silicates de zircone et leurs mélanges.

12. La formulation de barbotine selon la revendication 11 où l'une ou plusieurs des phases de liaison céramique sont présentes sous la forme de colloïdes.

13. La formulation de barbotine selon l'une des revendications 9 à 12 **caractérisée en ce que** la phase de fluide consiste en de l'eau et un ou plusieurs agents défloculants.

14. La formulation de barbotine selon l'une des revendications 9 à 13 **caractérisée en ce qu'**elle dispose d'un poids par litre allant de 1650 à 3000 g/l.

15. L'utilisation de la formulation de barbotine de l'une quelconque des revendications 9 à 14 pour la fabrication d'un corps vert en céramique par un processus sélectionné depuis un groupe constitué en un processus de moulage à barbotine, un processus de moulage à basse pression, un processus de moulage à haute pression ou un processus de moulage par vibration.

16. Un processus pour la fabrication du matériau céramique de la revendication 1, **caractérisé en ce qu'**une formulation de barbotine de la revendication 9 est sujette à un processus de moulage à barbotine afin de générer un corps vert en céramique et soumettant le corps vert en céramique à un processus de séchage et de frittage.

17. Une pièce d'équipement de four comprenant le matériau céramique de l'une quelconque des revendications précédentes 1 à 8.

18. La pièce d'équipement de four selon la revendication 17, où la pièce d'équipement de four est destinée au traitement de chaleur des tuiles de toit en céramique.

19. La pièce d'équipement de four selon la revendication 18, où la pièce d'équipement de four est une cassette en H ou en U.

20. Une pièce d'équipement de four comprenant le matériau céramique produit conformément au processus de la revendication 16.
